## Europäisches Patentamt

## European Patent Office

## Office européen des brevets

(19)

(11) Veröffentlichungsnummer: **0 168 720**
**B1**

(12) **EUROPÄISCHE PATENTSCHRIFT**

(45) Veröffentlichungstag der Patentschrift:
**05.10.88**

(21) Anmeldenummer: **85108290.9**

(22) Anmeldetag: **04.07.85**

(51) Int. Cl.⁴: **G 01 M 9/00, G 01 L 19/00**

(54) Adapter für den Anschluss einer Druckleitung an die gelochte Oberfläche eines im Windkanal zu testenden Modells.

(30) Priorität: **18.07.84 DE 8421459 U**

(43) Veröffentlichungstag der Anmeldung:
**22.01.86 Patentblatt 86/4**

(45) Bekanntmachung des Hinweises auf die Patenterteilung:
**05.10.88 Patentblatt 88/40**

(84) Benannte Vertragsstaaten:
**DE FR GB IT NL**

(56) Entgegenhaltungen:
**US - A - 4 182 158**

(73) Patentinhaber: **Deutsche Forschungs- und Versuchsanstalt für Luft- und Raumfahrt e.V., Linder Höhe Postfach 90 60 58, D-5000 Köln 90 (DE)**

(72) Erfinder: **Schäfer, Berthold, Im Schlangenhöfchen 9A, D-5060 Bergisch-Gladbach 1 (DE)**

(74) Vertreter: **Selting, Günther, Dipl.-Ing. et al, Deichmannhaus am Hauptbahnhof, D-5000 Köln 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Adapter für den Anschluss einer Druckleitung an die gelochte Oberfläche eines im Windkanal zu testenden Modells (US-A 4 182 158), sowie eine Entnahmevorrichtung für derartige Adapter.

Bei der Messung von Druckverteilungen an Modellen in Windkanälen wird die Oberfläche des Modells mit zahlreichen Löchern von ca. 0,5 mm Durchmesser versehen. Im Inneren des Modells wird an jedes Loch ein dünnes Rohr angeschlossen. Sämtliche Rohre werden zu einem Rohrbündel vereinigt und aus dem Modell herausgeführt. Die Enden der Rohre werden an einen Druckmessstellen-Umschalter angeschlossen, der jede Rohrleitung mit einem Druck/Spannungs-Wandler verbinden kann, um den Druck einer bestimmten Messstelle zu selektieren und messen und auswerten zu können. Bei derartigen Druckverteilungsmessungen kommt es nicht selten vor, dass ein Modell mit Hunderten von Messstellen versehen wird, so dass entsprechend viele Rohre aus dem Modell herausgeführt werden müssen. Dabei ist die Gefahr von Verwechselungen der Rohre sehr gross. Auch können Fehler durch abgeknickte, verschlossene oder undichte Druckleitungen auftreten. Durch Vertauschung von Druckleitungen und defekte Druckleitungen und Anschlüsse entsteht ein falsches Bild der tatsächlich vorhandenen Druckverteilung. Zur Kontrolle einzelner Messstellen muss auf das betreffende Loch ein definierter Druck aufgegeben werden. Erscheint dieser Druckwert bei der Auswertung der Messsignale nicht, so kann auf einen Fehler geschlossen werden. Bei der Kleinheit und dichten Anordnung der Messbohrungen ist das Aufbringen eines definierten Drucks auf eine bestimmte Messbohrung sehr schwierig, zumal die Flächen der zu testenden Modelle häufig gekrümmt sind.

Der Erfindung liegt die Aufgabe zugrunde, einen Adapter der eingangs genannten Art zu schaffen, der es ermöglicht, einzelne Messbohrungen auf einfache Weise gezielt an eine Druckquelle anzuschliessen, um die Messbohrung einschliesslich der an sie angeschlossenen Druckleitung zu überprüfen oder um zusätzliche Messbohrungen an die Auswertevorrichtung anzuschliessen.

Die Lösung dieser Aufgabe besteht erfindungsgemäss darin, dass ein Schlauchstück aus Elastomermaterial an einem Ende einen einstückig angeformten Flansch aufweist, welcher ein Klebemittel trägt.

Nach der Erfindung sind vorgefertigte Adapter aus einem weichelastischem Material vorgesehen, die einen selbstklebenden Flansch aufweisen, mit denen sie schnell und einfach an eine Messbohrung angeschlossen werden können. Der verformbare Flansch passt sich auch gekrümmten Flächen des Modells gut an, so dass ein abdichtender Anschluss des Schlauchstücks an die Oberfläche des Modells gewährleistet ist, ohne dass Nebenluft austreten kann. In das Schlauchstück, das vorzugsweise aus Gummi besteht, kann ein Druckschlauch eingesteckt werden, der zu einer Druckquelle führt, welche einen definierten Druck abgibt. Da die Messbohrung auf diese Weise mit einem definierten Druck versorgt wird, kann auf einfache Weise geprüft werden, ob am Ende des Rohres, das dieser Messstelle zugeordnet ist, ein entsprechender Druck vorhanden ist. Ferner besteht die Möglichkeit, die Dauer des Druckaufbaus am Ende des Rohres zu messen. Auf diese Weise lassen sich Leitungsvertauschungen und Leitungsdefekte sehr schnell feststellen.

Eine andere Anwendungsmöglichkeit des Adapters besteht darin, nachträglich Messstellen einzurichten. Bei Messungen in Unterschallkanälen. z.B. bei Strömungsmessungen an Kraftfahrzeugen, besteht gelegentlich der Wunsch, nach Installation des Messsystems zusätzliche Messstellen einzurichten. In derartigen Fällen braucht lediglich an dem Modell eine zusätzliche Messbohrung angebracht zu werden und der erfindungsgemässe Adapter wird von innen her gegen die Messbohrung gesetzt. An den Adapter kann ein Schlauch angeschlossen werden, der aus dem Modell herausgeführt wird.

Das Klebemittel besteht vorzugsweise aus einem doppelseitig beschichteten Klebeband, das mit einer Seite an dem Flansch haftet und dessen andere Seite mit einer Schutzfolie bedeckt ist. Damit das Klebeband beim Entfernen des Adapters vom Modell nicht reisst und Rückstände auf dem Modell zurücklässt, hat es vorzugsweise eine Gewebestruktur. Auch der Kleber sollte so gewählt werden, dass er beim Abziehen des Adapters von dem Modell keine Rückstände auf der Oberfläche zurücklässt.

Gemäss einer bevorzugten Ausführungsform der Erfindung ist die Haftfähigkeit des Klebebandes an dem Material des Adapters grösser als an Metall oder Lack. Dadurch ist sichergestellt, dass das Klebeband beim Entfernen des Adapters an diesem haften bleibt und nicht am Modell.

Zweckmässigerweise vergrössert sich die Wand des Schlauchstücks, ausgehend von einem Bereich konstanter Wandstärke aus, zum Flansch hin. Auf diese Weise wird verhindert, dass der Adapter in der Nähe des Flansches abknickt. Die Wandstärke des Flansches ist wesentlich geringer als diejenige des Schlauchstücks, so dass der Flansch sehr weich und leicht verformbar ist, um sich an die Kontur des Modells optimal anschmiegen zu können.

Die Erfindung betrifft ferner eine Entnahmevorrichtung für die erwähnten Adapter. Die Entnahmevorrichtung ist dadurch gekennzeichnet, dass ein Bogen aus doppelseitig beschichtetem perforiertem Klebeband vorgesehen ist, der auf der Unterseite eine perforierte erste Schutzfolie aufweist, dass auf der Oberseite des Bogens eine zweite Schutzfolie vorgesehen ist, die zahlreiche zu den Perforationen konzentrische Löcher aufweist, in denen jeweils der Flansch eines Adapters an dem Klebeband haftet, und dass diejenigen Bereiche des Klebebandes, an denen ein Adapter haftet, aus dem Klebeband ausgestanzt sind. Eine solche Entnahmevorrichtung ist besonders zweckmässig, da die Adapter relativ klein (ca. 10 mm lang und im Flansch 10 mm breit) sind und beim Arbeiten in Windkanälen in grosser Anzahl benötigt werden. Die Adapter stehen mit ihren Flanschen direkt auf den ausgestanzten Teilen des Klebebandes auf und brauchen lediglich mit diesen von der perforierten ersten Schutzfolie abgehoben zu werden. Es ist somit möglich, einen Adapter mit einer Hand zu ergreifen, von dem Bogen abzuziehen und mit derselben Hand an das Modell anzusetzen. Beim Abziehen des Adapters von der ersten Schutzfolie bleibt an der Aussenseite des Flansches das perforierte Klebeband haften. Die Aussenseite des Klebebandes wird nur kurzzeitig der Luft ausgesetzt, bevor sie an das Modell angesetzt wird. Auf diese Weise ist die Gefahr von Schmutzablagerungen an der Klebefläche sehr klein.

Im folgenden wird ein Ausführungsbeispiel der Erfindung unter Bezugnahme auf die Zeichnungen näher erläutert.

Es zeigen:

Fig. 1 eine schematische Darstellung der Verwendung eines Adapters in einem Windkanal,

Fig. 2 eine andere Anwendungsmöglichkeit des Adapters,

Fig. 3 eine Seitenansicht des Adapters, der noch in der Entnahmevorrichtung sitzt,

Fig. 4 eine perspektivische Darstellung der Entnahmevorrichtung mit zahlreichen Adaptern und

Fig. 5 einen Schnitt durch mehrere Adapter und die Entnahmevorrichtung.

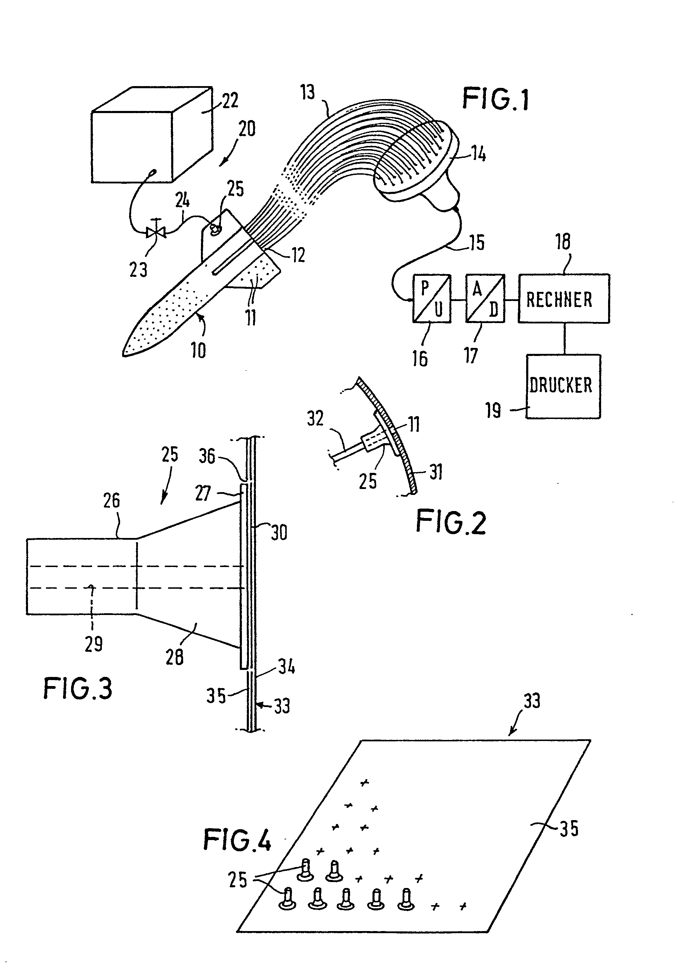

Das in Fig. 1 dargestellte Modell 10, z.B. ein Raketenmodell, das im Windkanal getestet werden soll, weist in seiner Oberfläche zahlreiche Löcher 11 oder Testbohrungen auf, an die von der Innenseite her dünne Metallrohre 12 angesetzt sind. Von jedem der Löcher führt ein dünnes Rohr aus dem Modell 10 heraus. Die Enden der Rohre 12 sind über flexible Anschlussschläuche 13 mit einem Druckmessstellen-Umschalter 14 verbunden, der jede der zahlreichen Druckleitungen mit einer Messleitung 15 verbinden kann. Die Messleitung 15 führt zu einem Druck/Spannungs-Wandler 16, dessen Ausgang mit dem Eingang eines Analog/Digital-Umsetzers 17 verbunden ist. Vom Ausgang des Analog/Digital-Umsetzers werden die gemessenen Druckwerte in digitaler Form dem Rechner 18 zugeführt, der einen Drukker 19 steuert. Wenn z.B. der Druckwert eines bestimmten Loches 11 unglaubhaft erscheint, können das betreffende Loch und seine Druckleitung mit der Prüfeinrichtung 20 getestet werden. Diese Prüfeinrichtung 20 enthält eine Druckquelle 22, die Druckluft mit einem definierten Druck liefert. Die Druckquelle 22 ist über ein Ventil 23 mit einer Druckleitung 24 verbunden, an deren Ende sich der Adapter 25 befindet. Dieser Adapter ist in Fig. 3 vergrössert dargestellt. Er besteht aus einem Schlauchstück 26, an dessen einen Ende

sich ein radial abstehender Flansch 27 befindet. Angrenzend an den Flansch 27 ist das Schlauchstück 26 im Bereich 28 kegelstumpfförmig ausgebildet. Der Adapter 25 weist einen zylindrischen Kanal 29 auf, der durchgehend ist und sich von einem Ende des Adapters bis zum anderen Ende erstreckt. Der Kanal 29 hat über seine Länge konstanten Querschnitt. Der insoweit beschriebene Adapter besteht aus einem einstückigen Gummiteil. Die Stirnseite des Flansches 27 ist mit Ausnahme der Öffnung des Kanals 29 mit einem Klebeband 30 bedeckt. Dieses Klebeband 30 ist beidseitig mit Kleber beschichtet und es haftet mit seiner einen Klebefläche vollflächig an dem Flansch 27. Die äussere Klebefläche des Klebebandes 30 kann an die Oberfläche des Modells 10 angelegt werden. Diese Befestigung des Adapters 25 am Modell 10 erfolgt in der Weise, dass der Kanal 29 exakt mit einem der Löcher 11 fluchtet. Das Ende der Druckleitung 24 wird in das rückwärtige Ende des Kanals 29 abdichtend eingesetzt. Durch Öffnen des Ventils 23 kann das betreffende Loch 11 gezielt mit einem definierten Druck beaufschlagt werden. Wenn die Leitung dieses Loches am Druckmessstellen-Umschalter 14 ausgewählt worden ist, kann an der Auswerteeinrichtung festgestellt werden, ob in der betreffenden Leitung 13 der richtige Druck herrscht, d.h. ob keine Leitungsvertauschung stattgefunden hat und ob der Strömungswiderstand der Leitung nicht zu gross ist.

Die in Fig. 1 dargestellte Benutzungsart wird man im allgemeinen bei Überschallkanälen anwenden. Eine weitere Anwendungsart, die insbesondere für Unterschallkanäle, in denen grössere Objekte getestet werden, in Betracht kommt, ist in Fig. 2 dargestellt. Gemäss Fig. 2 wird der Adapter 25 dazu benutzt, das Loch 11 in der Aussenhaut 31 eines Modells mit einer Leitung 32 zu verbinden. Der Adapter 25 wird hierbei mit seinem Flansch gegen die Innenseite der Aussenhaut 31 geklebt, wobei der Kanal des Adapters exakt mit dem Loch 11 fluchtet. Die Leitung 32 wird in das rückwärtige Ende des Adapters eingeschoben. Auf diese Weise können mit einfachen Mitteln nachträgliche Messstellen eingerichtet werden.

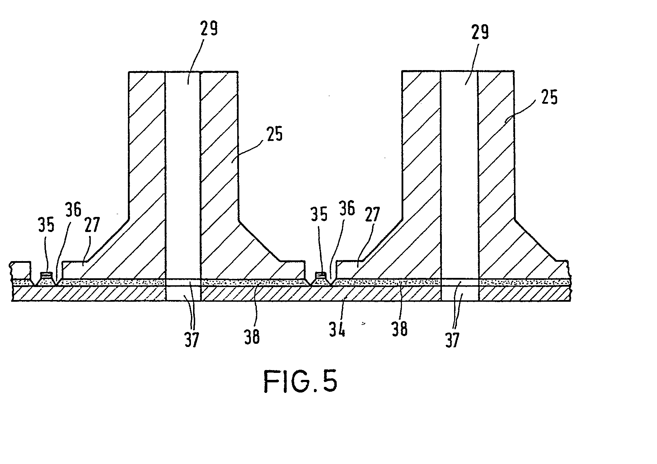

Die Fign. 3 bis 5 zeigen eine Entnahmevorrichtung 33, die zahlreiche Adapter im entnahmebereiten Zustand trägt. Diese Entnahmevorrichtung 33 besteht aus einem Bogen des Klebebandes 30, das auf der Unterseite mit einer ersten Schutzfolie 34 und auf seiner Oberseite mit einer zweiten Schutzfolie 35 bedeckt ist.

Die erste Schutzfolie 34 weist Perforationen 37 auf, deren Durchmesser dem Durchmesser der Kanäle 29 der Adapter 25 im wesentlichen entspricht und die sich auch im Klebeband 30 befinden. Aus dem Klebeband 30 und der zweiten Schutzfolie 35 ist für jeden Adapter 25 eine Scheibe 38 bzw. ein konzentrisches offenes Loch 36 ausgestanzt, deren Form und Grösse einander und der Stirnfläche des Adapters und des Flansches 27 entsprechen. Die Scheibe 38 erhält durch die konzentrische Perforation 37 Ringform und sie haftet auf der unteren ersten Schutzfolie 34. Auf die ringförmige Scheibe 38 des Klebebandes 30 ist durch das Loch 36 die Stirnseite mit dem Flansch 27 eines Adapters 25 eingedrückt. Die einzelnen Adapter 25 stehen gemäss Fig. 4 matrixförmig auf dem Bogen der Entnahmevorrichtung und sie haften über die Scheiben 38 des Klebebandes 30 an der perforierten ersten Schutzfolie 34. Wird ein Adapter 25 entnommen, dann löst sich die an diesem Adapter haftende Scheibe 38 der Klebefolie 30 von der unteren Schutzfolie 34. Die Aussenseite dieser Scheibe 38 kann dann gegen das Modell gedrückt werden, so dass der Adapter 27 fest an dem Modell haftet. Die Haftfähigkeit der Klebefolie 30 am Gummi des Adapters 27 ist grösser als die Haftfähigkeit dieser Klebefolie am Modell. Auf diese Weise kann der Adapter 27 zusammen mit dem Klebeband 30 vom Modell wieder entfernt werden. Das Klebeband 30 ist ein mit Kleber getränktes Gewebeband, das beim Abziehen nicht reisst. Auf diese Weise ist sichergestellt, dass der Adapter völlig rückstandsfrei von dem Modell abgezogen werden kann.

Bei dem Anwendungsbeispiel der Fig. 2 wird vorzugsweise ein Kleber verwendet, der dauerhaft ist. Der Kleber ist vorzugsweise auf Acrylbasis und der Gummi auf Kautschukbasis.

## Patentansprüche

1. Adapter für den Anschluss einer Druckleitung an die gelochte Oberfläche eines im Windkanal zu testenden Modells, dadurch gekennzeichnet, dass ein Schlauchstück (26) aus Elastomermaterial an einem Ende einen einstückig angeformten Flansch (27) aufweist, welcher ein Klebemittel trägt.

2. Adapter nach Anspruch 1, dadurch gekennzeichnet, dass das Klebemittel aus einem doppelseitig beschichteten Klebeband (30) besteht, das mit einer Seite an dem Flansch (27) haftet und dessen andere Seite mit einer Schutzfolie (34) bedeckt ist.

3. Adapter nach Anspruch 2, dadurch gekennzeichnet, dass das Klebeband (30) eine Gewebestruktur aufweist.

4. Adapter nach Anspruch 2 oder 3, dadurch gekennzeichnet, dass die Haftfähigkeit des Klebebandes (30) an dem Material des Adapters (25) grösser ist als an Metall oder Lack.

5. Adapter nach einem der Ansprüche 1 bis 4, dadurch gekennzeichnet, dass die Wand des Schlauchstücks (26) sich, ausgehend von einem Bereich konstanter Wandstärke aus, zum Flansch (27) hin vergrössert.

6. Entnahmevorrichtung für Adapter nach einem der Ansprüche 2 bis 5, dadurch gekennzeichnet, dass ein Bogen aus doppelseitig beschichtetem perforiertem Klebeband (30) vorgesehen ist, der auf der Unterseite eine perforierte erste Schutzfolie (34) aufweist, dass auf der Oberseite des Bogens eine zweite Schutzfolie (35) vorgesehen ist, die zahlreiche zu den Perforationen konzentrische Löcher (36) aufweist, in denen jeweils der Flansch eines Adapters (25) an dem Klebeband (30) haftet, und dass diejenigen Bereiche des Klebebandes, an denen ein Adapter (25) haftet, aus dem Klebeband (30) ausgestanzt sind.

## Claims

1. Adapter for connecting a pressure line to the perforated surface of a model to be tested in a wind channel, characterized in that one end of a hose portion (26) of elastomeric material comprises an integrally formed flange (27) carrying an adhesive agent.

2. Adapter according to claim 1, characterized in that the adhesive agent consists of an adhesive tape (30) coated on both surfaces of which one surface adheres to the flange (27) while its other surface is covered with a protective foil (34).

3. Adapter according to claim 2, characterized in that the adhesive tape (30) comprises a fabric structure.

4. Adapter according to claim 2 or 3, characterized in that the adhesiveness of the adhesive tape (30) to the material of the adapter (25) is higher than that to metal or varnish.

5. Adapter according to one of claims 1 to 4, characterized in that, starting from an area of constant wall thickness, the wall of the hose portion (26) is increasing towards the flange (27).

6. Offering means for adapters according to one of claims 2 to 5, characterized in that there is provided a sheet of perforated adhesive tape (30) which is coated on both surfaces and contains at its underside a perforated first protective foil (34), in that the upper side of said sheet is provided with a second protective foil (35) which includes a plurality of holes (36) concentric to the perforations, in which holes the respective flange of an adapter (25) adheres to the adhesive tape (30), and in that the regions of the adhesive tape to which an adapter (25) adheres are punched out of the adhesive type (30).

## Revendications

1. Dispositif de connexion d'une conduite sous pression à la surface perforée d'un modèle à tester dans une soufflerie aérodynamique, caractérisé en ce qu'un tronçon de tuyau souple (26) en matière élastomère comporte, à une extrémité, une bride (27) réalisée sur lui en une seule pièce et qui porte un moyen de fixation adhésive.

2. Dispositif de connexion suivant la revendication 1, caractérisé en ce que le moyen de fixation adhésive est formé d'une bande adhésive (30) à revêtement sur les deux faces, qui adhère par une face sur la bride (27) et dont l'autre face est recouverte d'une pellicule de protection (34).

3. Dispositif de connexion suivant la revendication 2, caractérisé en ce que la bande adhésive (30) a une structure de tissu.

4. Dispositif de connexion suivant la revendication 2 ou 3, caractérisé en ce que le pouvoir adhésif de la bande adhésive (30) est plus fort sur le matériau du dispositif de connexion (25) que sur le métal ou la laque.

5. Dispositif de connexion suivant l'une des revendications 1 à 4, caractérisé en ce que la paroi du tronçon de tuyau souple (26) devient plus épaisse vers la bride (27), à partir d'une zone d'épaisseur constante de paroi.

6. Dispositif de prélèvement pour dispositif de connexion suivant l'une des revendications 2 à 5, caractérisé en ce qu'il est prévu une feuille formée d'une bande adhésive (30) revêtue sur les deux faces et perforée, qui comporte, sur sa face inférieure, une première pellicule de protection (34) perforée, en ce qu'il est prévu sur la face supérieure de cette feuille une seconde pellicule de protection (35) qui comporte de nombreux trous (36) concentriques aux perforations et dans chacun desquels la bride d'un dispositif de connexion (25) correspondant adhère sur la bande adhésive (30) et en ce que les zones de la bane adhésive sur lesquelles adhère un dispositif de connexion (25) sont découpées sur cette bande adhésive (30).

FIG.1

22

20

13

14

24

25

23

12

15

18

11

16  17

P
U

A
D

RECHNER

10

DRUCKER

19

32

11

25

31

FIG.2

25

36

26

27

30

29

28

34

35

33

FIG.3

33

35

25

FIG.4

FIG.5